# FASCICULE DE BREVET EUROPEEN

(11) **EP 2 146 834 B1**
(45) Date de publication et mention de la délivrance du brevet: **17.02.2016**
(21) Numéro de dépôt: 08805734.4
(22) Date de dépôt: 30.04.2008
(51) Int. Cl.: B29C 43/36, B29C 43/34, B29C 70/46, B29C 70/68, B29C 31/00, B29C 33/10, B29K 105/06, B29K 705/00

(54) **PROCEDE ET DISPOSITIF DE MOULAGE SOUS PRESSION DE MATERIAUX COMPOSITES**
VERFAHREN UND VORRICHTUNG ZUR PRESSFORMUNG VON VERBUNDWERKSTOFFEN
METHOD AND DEVICE FOR COMPRESSION MOULDING COMPOSITE MATERIALS

(30) Priorité: 30.04.2007 FR 0754803
(43) Date de publication de la demande: 27.01.2010
(73) Titulaire: Ea Technique, Société Par Actions Simplifiée, 32600 L'isle Jourdain (FR)
(72) Inventeur: VALEMBOIS, Guy, F-31400 Toulouse (FR)
(74) Mandataire: Rhein, Alain
(86) Numéro de dépôt international: PCT/FR2008/050780
(87) Numéro de publication internationale: WO 2008/148984

(56) Documents cités:
- EP-A- 0 376 472
- EP-A- 0 916 477
- EP-A- 1 033 231
- EP-A- 1 281 609
- WO-A-2006/047435
- US-A- 3 859 409
- US-A- 5 902 613
- US-A- 6 146 122

## Description

La présente invention a trait au domaine de la fabrication par moulage d'objets en matériau composite thermoplastique ou thermodurcissable.

La présente invention a pour objet un procédé de moulage sous pression de matériaux composites, ainsi que le dispositif de moule permettant la mise en oeuvre de ce procédé.

On connaît de nombreux procédés de moulage de matériaux composites consistant à mettre en forme sous pression un amalgame d'éléments de matériau composite, constitués généralement de nappes ou de morceaux de nappes non tissées de fibres de renfort noyées dans une matrice thermodurcissable ou thermoplastique, où lesdites fibres sont de différentes natures comme par exemple du verre, du carbone ou de l'aramide, alors que la matrice est du type époxyde ou phénolique.

On connaît ainsi par le document FR 2.740.149 un procédé de production d'un matériau de moulage en feuille, permettant de fabriquer une coquille de protection des orteils pour chaussure de sécurité. Le procédé consiste à découper en pastilles ou en morceaux, dans une étoffe où les fibres sont disposées de manière unidirectionnelle ou sont tissées.

On connaît aussi par le document JP 02 131929 un procédé et un appareil pour fabriquer un article en plastique renforcé, ledit procédé consistant à superposer dans un moule plusieurs couches de matière à mouler dont une couche de résine tetrafluoroéthylène coloré.

Le document EP 916 477 propose de découper une nappe de fibres noyées dans une matrice en une multiplicité d'éléments, puis d'arranger tridimensionnellement lesdits éléments puis de réaliser le moulage sous pression de l'arrangement tridimensionnel obtenu.

On connaît aussi le document EP0376472 qui concerne une plaque composite thermoplastique comprenant une résine thermoplastique et des morceaux construits au moyen de fibres de renforcement unidirectionnellement orientées.

Tous ces documents, et d'autres encore, concernent essentiellement des procédés de réalisation de pièces généralement d'épaisseur sensiblement constante, en vue de fabriquer des coques ou des plaques par exemple, par contre aucun ne concerne la réalisation de pièces plus volumineuses, du fait notamment de la difficulté de la mise en oeuvre de formes volumiques tout en garantissant les propriétés mécaniques de la pièce.

La présente invention a pour but de remédier à cette carence en proposant un procédé de réalisation de pièces en matériaux composites de formes et d'épaisseurs variables tout en maîtrisant la cohésion du matériau et donc ses propriétés mécaniques. Le procédé selon l'invention a pour but d'obtenir une pièce moulée qui peut présenter une isotropie suffisante lui conférant une usinabilité comparable à celle d'une pièce métallique de fonderie.

Le but de l'invention peut être atteint par le procédé comme défini dans la revendication 1 et par le dispositif comme défini dans la revendication 15.

Le procédé de moulage sous pression de matériaux composites selon l'invention consiste à mettre en forme sous pression un pâton constitué d'un amalgame de fibres non tissées, mélangées de manière aléatoire et associées, dans une proportion déterminée, à une matière thermodurcissable ou thermoplastique, et il se caractérise essentiellement en ce que la préparation dudit pâton consiste à mélanger lesdites fibres et ladite matière thermodurcissable ou thermoplastique, sous vide d'air, tandis que ladite mise en forme est obtenue par introduction dudit pâton dans un moule conçu et dimensionné pour résister aux fortes pressions, et qui présente une cavité de moulage à la forme de la pièce à réaliser et muni d'au moins un puits configuré pour recevoir, de manière ajustée, un piston plongeur dont le coulissement est apte à réaliser la mise en pression dudit pâton dans ladite cavité, et donc la mise en forme de celui-ci dans ledit moule.

Selon une caractéristique additionnelle du procédé de moulage selon l'invention, lors de la préparation du pâton, on place les fibres sous vide d'air, puis on y incorpore la résine en utilisant l'effet d'aspiration créé par le vide d'air.

Selon une autre caractéristique additionnelle du procédé de moulage selon l'invention, on mélange les fibres et la matière thermodurcissable ou thermoplastique, après incorporation préalable d'un solvant volatile.

La viscosité souvent assez élevée de la résine, génère des difficultés à mélanger correctement et de manière homogène la pâte visqueuse et fibreuse. L'incorporation d'un solvant ayant des propriétés volatiles à la matière thermodurcissable ou thermoplastique, rend cette dernière moins visqueuse, en sorte que l'opération de mélange fibre-résine est plus performante et conduit à l'obtention d'une pâte homogène. A l'issue du mélange, le composé volatile se dissipe par évaporation, cette phase de disparition du solvant étant accélérée lorsque le mélange est réalisé sous vide d'air.

Selon une autre caractéristique additionnelle du procédé de moulage selon l'invention, on mélange les fibres et la matière thermodurcissable ou thermoplastique en respectant les règles suivantes, le ratio entre la longueur, ou l'épaisseur caractéristique minimale, de la pièce à fabriquer, sur la longueur maximale des fibres est supérieur à 2, de préférence égale 4, et le ratio entre la longueur minimale des fibres sur le diamètre des fibres est supérieur à 10.

Selon une caractéristique additionnelle du procédé de moulage selon l'invention lorsque le moule comporte plusieurs puits et pistons plongeurs, lesdits pistons sont activés simultanément ou séparément selon une séquence temporelle particulière.

Selon une autre caractéristique additionnelle du procédé de moulage selon l'invention, on soumet la matière, avant, pendant et/ou après la mise en pression, à des conditions particulières de température.

Selon une autre caractéristique additionnelle du procédé de moulage selon l'invention, on applique un effort sur le ou les pistons plongeurs en sorte d'engendrer une pression de 30 à 1000 bars selon le besoin.

Selon une autre caractéristique additionnelle du procédé de moulage selon l'invention, pour mettre en forme le pâton on utilise des fibres de longueur pouvant varier, de manière contrôlée ou aléatoire, entre 0,1 et 100 mm.

Selon une autre caractéristique additionnelle du procédé de moulage selon l'invention, on place dans la cavité de moulage du moule, préalablement à l'introduction du pâton, un ou plusieurs plis de nappe tissée ou non tissée de fibres de renfort noyées dans une matrice thermodurcissable ou thermoplastique.

Selon une autre caractéristique additionnelle du procédé de moulage selon l'invention, on incorpore au pâton un insert, ou plusieurs, destiné à demeurer dans la pièce à réaliser, cette incorporation ayant lieu soit lors de la préparation dudit paton, soit après l'introduction dudit pâton dans le moule, soit au cours de l'introduction dans ledit moule, le ou lesdits inserts ayant été positionnés préalablement dans ce dernier.

Selon une autre caractéristique additionnelle du procédé de moulage selon l'invention, le ou les inserts consistent en un ou plusieurs éléments en métal ou en matière plastique, ou en un ou plusieurs éléments composites se présentant sous la forme de tresse et/ou de nappe ou pli de matériau composite.

Selon une autre caractéristique additionnelle du procédé de moulage selon l'invention, on pèse finement les matériaux entrant dans la composition du pâton, en sorte de garantir la forme de la pièce à mouler.

Selon une autre caractéristique additionnelle du procédé de moulage selon l'invention, on incorpore au pâton plus de matière thermodurcissable ou thermoplastique que nécessaire, et on prévoit le fluage et l'évacuation du surplus de ladite matière.

Selon une autre caractéristique additionnelle du procédé de moulage selon l'invention, on incorpore au pâton au moins un élément en matériau compressible.

La présente invention a également pour objet un dispositif de moule pour la mise en oeuvre du procédé de moulage selon l'invention.

Le dispositif de moule selon l'invention se caractérise essentiellement en ce qu'il est constitué d'un élément ou de plusieurs éléments assemblés, présentant intérieurement une cavité à la forme de la pièce à réaliser, et en ce qu'il comprend au moins un puits, conçu pour d'une part permettre le chargement du moule en matière à mouler, et d'autre part recevoir en coulissement, de manière ajustée, un piston plongeur dont le coulissement généré par des moyens moteur, est apte à réaliser la mise en pression de ladite matière à mouler.

Selon une caractéristique additionnelle du dispositif de moule selon l'invention, le piston plongeur présente, du côté interne du moule, une extrémité conformée pour participer à la mise en forme de la pièce à mouler.

Les avantages et les caractéristiques du procédé et du dispositif selon l'invention, ressortiront plus clairement de la description qui suit et qui se rapporte au dessin annexé, lequel en représente plusieurs modes de réalisation non limitatifs.

Dans le dessin annexé :
- les figures 1a et 1b représentent des vues schématiques d'un dispositif de moule pour la mise en oeuvre du procédé de moulage selon l'invention et illustrant deux phases de ce procédé.
- les figures 2a, 2b et 2c représentent des vues schématiques d'une variante du dispositif de moule pour la mise en oeuvre du procédé de moulage selon l'invention.
- les figures 3a, 3b et 3c représentent des vues schématiques d'une autre variante du dispositif de moule pour la mise en oeuvre du procédé de moulage selon l'invention.

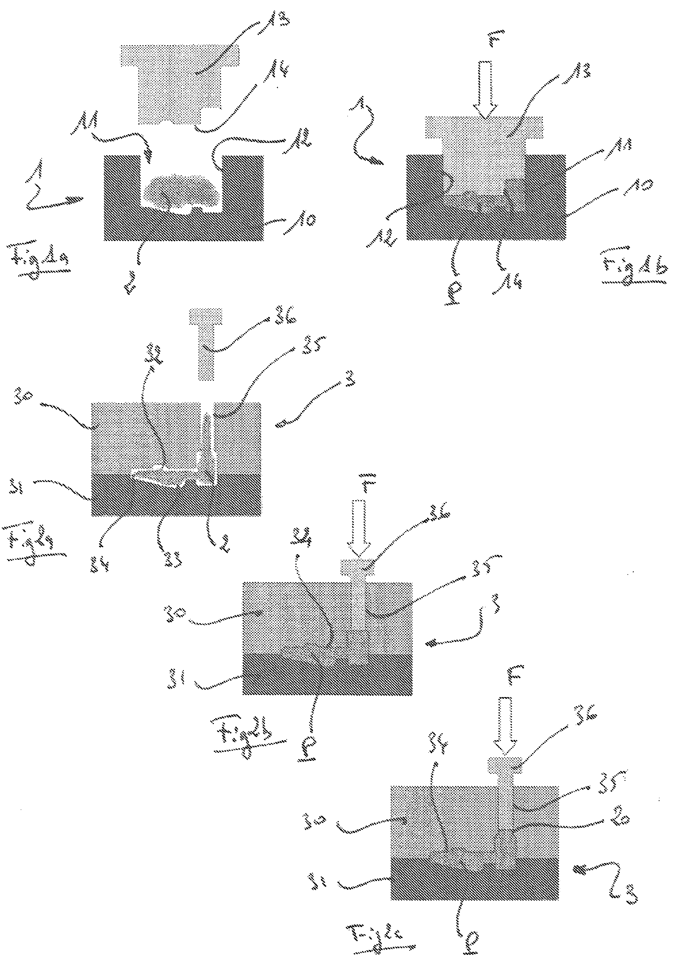

En référence aux figures 1a et 1b, on peut voir un dispositif de moule 1 selon l'invention, lequel comprend un élément 10 dans lequel est pratiquée une cavité 11 présentant la forme de la pièce P à mouler. Le moule 1 comprend également un puits 12 débouchant dans la cavité 11, et dans lequel peut coulisser de manière ajustée, un piston plongeur 13, sous l'action d'un moyen moteur, non représenté.

Conformément au procédé selon l'invention, on prépare un pâton 2 constitué d'un amalgame de fibres non tissées, mélangées de manière aléatoire et associées, dans une proportion déterminée, à une matière thermodurcissable ou thermoplastique.

Les fibres peuvent être de différentes natures, elles peuvent consister, non limitativement, en du verre, du carbone ou de l'aramide, ou bien des fibres de basaltes, tandis que la matière thermodurcissable ou thermoplastique peut être une résine de type époxy ou phénolique, mais également du type ester de vinyle.

On notera qu'un additif peut être avantageusement ajouté à la résine pour donner plus de performance à la pièce moulée. En particulier, des nanotubes de carbone qui ont la propriété de créer des liaisons microscopiques entre les fibres carbones ce qui renforce la cohésion du matériau permettant aux fibres de fournir une résistance mécanique macroscopique nettement meilleure. Cet additif peut être incorporé à la résine pendant sa formulation, ou pendant sa phase de mélange avec les fibres.

Les fibres peuvent être de différentes longueurs, la longueur peut être choisie ou non, selon la nature de la pièce à fabriquer.

D'autre part la proportion fibres/ matière thermodurcissable ou thermoplastique peut également varier, de même qu'il est possible de mélanger des fibres de natures différentes, ainsi que des matières thermodurcissables ou thermoplastiques différentes.

Par ailleurs, le pâton 2 peut être constitué de deux manières, selon la première les fibres sont brassées, puis on incorpore la matière thermodurcissable ou thermoplastique, et selon la seconde, les fibres sont pré-imprégnées de matière thermodurcissable ou thermoplastique avant d'être brassées. Il est également possible d'amalgamer des fibres pré-imprégnées et de la matière thermodurcissable ou thermoplastique.

Il est également possible de pré-remplir le moule 1 de fibres sèches, et d'y incorporer ultérieurement la résine.

Selon l'invention, le pâton 2 est confectionné à partir d'une pâte préparée préalablement sous vide d'air, et mélangée mécaniquement après éventuellement incorporation d'un solvant permettant de rendre le mélange plus fluide, et facilitant ainsi le brassage.

Après confection du pâton 2, celui-ci est introduit dans la cavité 11 du moule 1 au travers du puits 12 dans lequel est ensuite engagé le piston plongeur 13, puis on exerce une pression F déterminée sur le piston plongeur 13 sous l'action d'une presse par exemple.

Selon une variante, on associe au cycle de fabrication, un cycle thermique, la matière dont est fait le pâton 2 peut ainsi être soumise à des conditions particulières de température, au cours de la préparation du pâton 2, pendant la mise en pression, dans ce cas le moule 1 est configuré pour cela, ou après la mise en pression.

Lors de la mise en pression, le pâton 2 épouse la forme de la cavité 11. On notera que dans le mode de réalisation représenté, l'extrémité 14 du piston plongeur 13, du côté interne, est conformée pour participer à la mise en forme de la pièce P à fabriquer.

On notera que préalablement à l'introduction du pâton 2 dans le moule 1, on peut introduire une ou plusieurs tresses et/ou un ou plusieurs plis de matériau composite, afin de donner à l'objet une résistance supplémentaire dans une direction ou un plan particulier.

Par exemple, le pré positionnement d'un tissu dans un pâton ou dans le moule, peut être disposé de telle sorte qu'il réalise la peau de la pièce, et pourra être constitué de fibre de verre. Cette peau en fibre de verre aura l'avantage de former une couche séparatrice entre la matière de base du pâton et le milieu extérieur. En effet, la peau extérieure de la pièce peut être en contact avec une surface possédant un couple galvanique avec le carbone, comme c'est le cas de l'aluminium. Dans ce cas, cette couche séparatrice est indispensable et est traitée par l'addition externe d'une couche d'isolation du type fibre de verre.

En référence maintenant aux figures 2a, 2b et 2c, on peut voir un moule 3 selon un autre mode de réalisation. Ce moule 3 vient de l'assemblage de deux éléments 30 et 31 comprenant chacun une cavité, respectivement 32 et 33, et dont le rapprochement permet de constituer une cavité de moulage 34. Dans ce mode de réalisation, l'élément 30 est percé d'un puits 35 qui débouche dans la cavité de moulage 34, et dans lequel peut coulisser de manière ajustée un piston plongeur 36.

Sur la figure 2a, on introduit dans la cavité 34 par le puits 35 un pâton 2 avant d'y introduire le piston plongeur 36. Sur la figure 2b, on exerce une pression F sur le piston plongeur 36 pour mettre le pâton 2 en pression et assurer sa mise en forme.

La quantité de matière contenue dans le pâton 2 doit de préférence faire l'objet d'une pesée fine, afin de garantir la forme de la pièce P.

Afin d'éviter une telle pesée fine, on peut prévoir d'introduire dans le pâton 2 un ou plusieurs éléments compressibles, une bille de silicone ou un élément en mousse à cellule fermée par exemple, lequel est, en fonction de la quantité de matière contenue dans le pâton 2, plus moins compressé, mais qui permet de garantir la forme de la pièce P. On notera que, de préférences on s'arrangera pour que le ou les éléments compressibles soient disposés en des emplacements nos soumis à une résistance particulière.

Selon une variante, en cas d'incertitude sur la quantité de matière, il peut être prévu un surcroît de matière, lequel se transforme en un surplus 20 qui, comme cela est visible sur la figure 2c, prend place dans le puits 35 à l'extrémité du piston plongeur 36, et qui, soit sera maintenu sur la pièce P en étant prévue non fonctionnelle, soit sera supprimé par usinage.

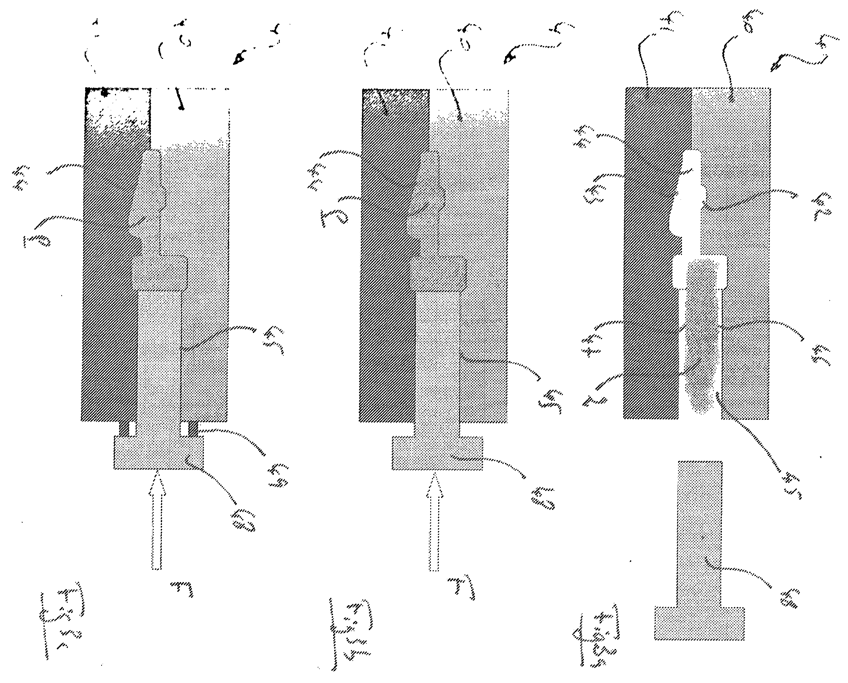

En référence maintenant aux figures 3a, 3b et 3c, on peut voir un dispositif de moule 4 selon l'invention, dans une autre variante. Ce moule 4 est constitué du rapprochement de deux éléments 40 et 41, comprenant chacun une cavité, respectivement 42 et 43, et dont le rapprochement permet de créer une cavité de moulage 44. Le moule 4 comprend également un puits 45 débouchant dans la cavité de moulage 44, et constitué du rapprochement de deux alésages 46 et 47, pratiqués chacun dans l'un des deux éléments respectivement 40 et 41. Le puits 45 est destiné à recevoir un piston plongeur 48 apte, sous l'effet d'une pression F, à mettre en pression un pâton 2 en vue de sa mise en forme dans la cavité de moulage 44.

Sur la figure 3c, on peut voir que des butées 49 peuvent être intercalées entre le moule 4 et le piston plongeur 48 en vue de limiter la pénétration de celui-ci dans le puits 45, en sorte de garantir la forme de pièce à mouler P.

Quel que soit le mode de réalisation du dispositif de moule selon l'invention, la pression est utilisée pour mettre en forme la pièce P via le piston plongeur, ne reste pas installée dans le moule, lequel voit sa pression interne chuter du fait de l'écoulement de matière dans les interstices du moule, et éventuellement dans des évents prévus à cet effet, en sorte qu'il peut être prévu dans le pâton de la matière thermodurcissable ou thermoplastique en excès.

Quel que soit le mode de réalisation du dispositif de moule selon l'invention, celui-ci peut comporter des évents ou système analogue, permettant le dégazage de la matière lors de l'opération de moulage.

## Revendications

1. Procédé de moulage sous pression de matériaux composites consistant à préparer un pâton (2) constitué d'un amalgame de fibres non tissées, mélangées de manière aléatoire et associées, dans une proportion déterminée, à une matière thermodurcissable ou thermoplastique, et à mettre en forme sous pression ce pâton (2), **caractérisé en ce que** la préparation dudit pâton (2) consiste à mélanger lesdites fibres et ladite matière thermodurcissable ou thermoplastique, sous vide d'air, tandis que ladite mise en forme est obtenue par introduction dudit pâton (2) dans un moule (1; 3; 4) conçu et dimensionné pour résister aux fortes pressions, et qui présente une cavité de moulage (11; 34; 44) à la forme de la pièce (P) à réaliser et muni d'au moins un puits (12; 35; 45) configuré pour recevoir, de manière ajustée, un piston plongeur (13; 36; 48) dont le coulissement est apte à réaliser la mise en pression dudit pâton (2) dans ladite cavité (11; 34; 44), pour sa mise en forme dans ledit moule (1; 3; 4), la pression ne restant pas installée dans ledit moule (1 ; 3 ; 4).

2. Procédé de moulage selon la revendication 1, **caractérisé en ce que** lors de la préparation du pâton (2), on place les fibres sous vide d'air, puis on y incorpore la résine en utilisant l'effet d'aspiration créé par le vide d'air.

3. Procédé de moulage selon la revendication 1 ou la revendication 2, **caractérisé en ce qu'**on mélange les fibres et la matière thermodurcissable ou thermoplastique, après incorporation préalable d'un solvant volatile.

4. Procédé de moulage selon l'une quelconque des revendications 1 à 3, **caractérisé en ce qu'**on mélange les fibres et la matière thermodurcissable ou thermoplastique en respectant les règles suivantes : le ratio entre la longueur, ou l'épaisseur caractéristique minimale, de la pièce (P) à fabriquer, sur la longueur maximale des fibres est supérieur à 2, de préférence égal à 4, et le ratio entre la longueur minimale des fibres sur le diamètre des fibres est supérieur à 10.

5. Procédé de moulage selon l'une quelconque des revendications 1 à 4, **caractérisé en ce que** lorsque le moule (1; 3; 4) comporte plusieurs puits (12; 35; 45) et pistons plongeurs (13; 36; 48), lesdits pistons (13; 36; 48) sont activés simultanément ou séparément selon une séquence temporelle particulière.

6. Procédé de moulage selon l'une quelconque des revendications 1 à 5, **caractérisé en ce qu'**on soumet la matière, avant, pendant et/ou après la mise en pression, à des conditions particulières de température.

7. Procédé de moulage selon l'une quelconque des revendications 1 à 6, **caractérisé en ce qu'**on applique un effort (F) sur le ou les pistons plongeurs (13; 36; 48) en sorte d'engendrer une pression de 30 à 1000 bars selon le besoin.

8. Procédé de moulage selon l'une quelconque des revendications 1 à 7, **caractérisé en ce que** pour mettre en forme le pâton (2) on utilise des fibres de longueur pouvant varier, de manière contrôlée ou aléatoire, entre 0,1 et 100 mm.

9. Procédé de moulage selon l'une quelconque des revendications 1 à 8, **caractérisé en ce qu'**on place dans la cavité de moulage (11; 34; 44) du moule (1; 3; 4), préalablement à l'introduction du pâton (2), un ou plusieurs plis de nappe tissée ou non tissée de fibres de renfort noyées dans une matrice thermodurcissable ou thermoplastique.

10. Procédé de moulage selon l'une quelconque des revendications 1 à 9, **caractérisé en ce qu'**on incorpore au pâton (2) un insert, ou plusieurs, destiné à demeurer dans la pièce (P) à réaliser, cette incorporation ayant lieu soit lors de la préparation dudit pâton (2), soit après l'introduction dudit pâton (2) dans le moule (1; 3; 4), soit au cours de l'introduction dans ledit moule (1; 3; 4), le ou lesdits inserts ayant été positionnés préalablement dans ce dernier.

11. Procédé de moulage selon la revendication 10, caractérisé en ce le ou les inserts consistent en un ou plusieurs éléments en métal ou en matière plastique, ou en un ou plusieurs éléments composites se présentant sous la forme de tresse et/ou de nappe ou pli de matériau composite.

12. Procédé de moulage selon l'une quelconque des revendications 1 à 11, **caractérisé en ce qu'**on pèse finement les matériaux entrant dans la composition du composition du pâton (2), en sorte de garantir la forme de la pièce (P) à mouler.

13. Procédé de moulage selon l'une quelconque des revendications 1 à 10, **caractérisé en ce qu'**on incorpore au pâton (2) plus de matière thermodurcissable ou thermoplastique que nécessaire, et on prévoit le fluage et l'évacuation du surplus de ladite matière.

14. Procédé de moulage selon l'une quelconque des revendications 1 à 13, **caractérisé en ce qu'**on incorpore au pâton (2) au moins un élément en matériau compressible.

15. Dispositif de moule (1; 3; 4) pour la mise en oeuvre de l'opération de mise en forme sous pression du procédé de moulage selon l'une quelconque des revendications 1 à 14, **caractérisé en ce qu'**il est constitué d'un élément ou de plusieurs éléments assemblés, présentant intérieurement une cavité (11; 34; 44) à la forme de la pièce (P) à réaliser, et **en ce qu'**il comprend au moins un puits (12; 35; 45), conçu pour d'une part permettre le chargement du moule en matière à mouler, et d'autre part recevoir en coulissement, de manière ajustée, un piston plongeur (13; 36; 48) dont le coulissement généré par des moyens moteur, est apte à réaliser la mise en pression de ladite matière à mouler, la pression ne restant pas installée dans ledit moule.

16. Dispositif de moule (1; 3; 4) selon la revendication 15, **caractérisé en ce que** le piston plongeur (13; 36; 48) présente, du côté interne du moule, une extrémité conformée pour participer à la mise en forme de la pièce (P) à mouler.

## Patentansprüche

1. Verfahren zum Pressformen von Verbundmaterialien, das darin besteht, einen Klump (2) aufzubereiten, der aus einem Amalgam von ungewebten Fasern besteht, die in einem bestimmten Verhältnis mit einem duroplastischen oder thermoplastischen Material zufällig gemischt und demselben zugeordnet sind, und diesen Klump (2) zu pressformen, **dadurch gekennzeichnet, dass** die Aufbereitung des besagten Klumps (2) darin besteht, die besagten Fasern und das duroplastische oder thermoplastische Material unter Vakuum zu mischen, während die besagte Formgebung durch Einführen des Klumps (2) in eine Gussform (1; 3; 4) erhalten wird, die ausgebildet und dimensioniert ist, um hohen Drücken zu widerstehen, und die einen Formhohlraum (11; 34; 44) aufweist, der die Form des zu erzeugenden Teils (P) hat und mit mindestens einer Vertiefung (12; 35; 45) versehen ist, die konfiguriert ist, um einen Kolbenstempel (13; 36; 48) schlüssig aufzunehmen, dessen Gleiten geeignet ist, um die Druckbeaufschlagung des Klumps (2) in dem besagten Hohlraum (11; 34; 44) zwecks seiner Pressformung in der besagten Gussform (1; 3; 4) durchzuführen, wobei der Druck nicht in der besagten Gussform (1; 3; 4) installiert bleibt.

2. Verfahren zum Pressformen nach Anspruch 1, **dadurch gekennzeichnet, dass** bei der Aufbereitung des Klumps (2) die Fasern unter Luftvakuum gebracht werden, danach das Harz unter Verwendung der durch das Luftvakuum entstandenen Saugwirkung beigefügt wird.

3. Verfahren zum Pressformen nach Anspruch 1 oder Anspruch 2, **dadurch gekennzeichnet, dass** die Fasern und das duroplastische oder thermoplastische Material nach vorabgehender Beifügung eines flüchtigen Lösungsmittels gemischt werden.

4. Verfahren zum Pressformen nach irgendeinem der Ansprüche 1 bis 3, **dadurch gekennzeichnet, dass** die Fasern und das duroplastische oder thermoplastische Material unter Beachtung der folgenden Regeln gemischt werden: das Verhältnis zwischen der Länge, oder der charakteristischen Mindestdicke, des zu erzeugenden Teils (P) und der maximalen Länge der Fasern ist größer als 2, vorzugsweise gleich 4, und das Verhältnis zwischen der Mindestlänge der Fasern und dem Durchmesser der Fasern ist größer als 10.

5. Verfahren zum Pressformen nach irgendeinem der Ansprüche 1 bis 4, **dadurch gekennzeichnet, dass**, wenn die Gussform (1; 3; 4) eine Mehrzahl von Vertiefungen (12; 35; 45) und Kolbenstempeln (13; 36; 48) umfasst, die besagten Kolben (13; 36; 48) gleichzeitig oder getrennt in einer bestimmten zeitlichen Folge aktiviert werden.

6. Verfahren zum Pressformen nach irgendeinem der Ansprüche 1 bis 5, **dadurch gekennzeichnet, dass** das Material vor, während und/oder nach der Druckbeaufschlagung besonderen Temperaturbedingungen ausgesetzt wird.

7. Verfahren zum Pressformen nach irgendeinem der Ansprüche 1 bis 6, **dadurch gekennzeichnet, dass** eine Kraft (F) auf dem bzw. den Kolbenstempeln (13; 36; 48) ausgeübt wird, so dass einen Druck von 30 bis 1000 Bar, je nach den Bedürfnissen, erzeugt wird.

8. Verfahren zum Pressformen nach irgendeinem der Ansprüche 1 bis 7, **dadurch gekennzeichnet, dass** zur Formgebung des Klumps (2) Fasern verwendet werden, deren Länge gesteuert oder zufällig zwischen 0,1 und 100 mm variieren kann.

9. Verfahren zum Pressformen nach irgendeinem der Ansprüche 1 bis 8, **dadurch gekennzeichnet, dass** in dem Formhohlraum (11 34, 44) der Gussform (1; 3; 4) vor der Einführung des Klumps (2) eine oder mehrere Lagen von Vlies aus in einer duroplastischen oder thermoplastischen Matrix eingebetteten gewebten oder nichtgewebten Verstärkungsfasern eingebracht werden.

10. Verfahren zum Pressformen nach irgendeinem der Ansprüche 1 bis 9, **dadurch gekennzeichnet, dass** dem Klump (2) ein oder mehrere Einsätze beigefügt werden, die dazu bestimmt sind, in dem zu erzeugenden Teil (P) zu bleiben, wobei diese Beifügung während der Aufbereitung des besagten Klumps (2) oder nach der Einführung des besagten Klumps (2) in die Gussform (1; 3; 4) oder während der Einführung in die Gussform (1; 3; 4) erfolgt, wobei der bzw. die Einsätze zuvor in dieser letzteren positioniert wurden.

11. Verfahren zum Pressformen nach Anspruch 10, **dadurch gekennzeichnet, dass** der bzw. die Einsätze aus einem oder mehreren Elementen aus Metall oder Kunststoff oder aus einem oder mehreren Verbundelementen bestehen, die als ein Geflecht und/oder ein Vlies oder eine Lage von Verbundmaterial ausgestaltet sind.

12. Verfahren zum Pressformen nach irgendeinem der Ansprüche 1 bis 11, **dadurch gekennzeichnet, dass** die in der Zusammensetzung des Klumps (2) verwendeten Materialien fein abgewogenen werden, so dass die Form des auszuformenden Teils (P) gewährleistet wird.

13. Verfahren zum Pressformen nach irgendeinem der Ansprüche 1 bis 10, **dadurch gekennzeichnet, dass** mehr duroplastisches oder thermoplastisches Material wie nötig dem Klump (2) beigefügt wird, und dass das Kriechen und Entfernen des Überschusses des besagten Materials vorgesehen wird.

14. Verfahren zum Pressformen nach irgendeinem der Ansprüche 1 bis 13, **dadurch gekennzeichnet, dass** wenigstens ein Element aus komprimierbarem Material dem Klump (2) beigefügt wird.

15. Vorrichtung zum Pressformen (1; 3; 4) zur Durchführung des Pressformvorgangs des Verfahrens zum Pressformen nach irgendeinem der Ansprüche 1 bis 14, **dadurch gekennzeichnet, dass** es aus einem Element oder mehreren zusammengefügten Elementen besteht, die innen einen Hohlraum (11; 34; 44) mit der Form des zu erzeugenden Teils (P) aufweisen und dadurch, dass sie mindestens eine Vertiefung (12; 35; 45) umfasst, die vorgesehen ist, um einerseits die Beladung der Gussform mit zu formendem Material zu erlauben, und andererseits schlüssig einen Kolbenstempel (13; 36; 48) gleitend aufzunehmen, dessen von Motormitteln erzeugtes Gleiten geeignet ist, um die Druckbeaufschlagung des besagten Formmaterials durchzuführen, wobei der Druck nicht in der besagten Gussform installiert bleibt.

16. Vorrichtung zum Pressformen (1; 3; 4) nach Anspruch 15, **dadurch gekennzeichnet, dass** der Kolbenstempel (13; 36; 48) an der Innenseite der Gussform ein Ende aufweist, das geformt ist, um zu der Formgebung des zu formenden Teils (P) beizutragen.

## Claims

1. A method for compression molding of composite materials consisting in preparing a lump (2) formed of an amalgam of non-woven fibers, mixed randomly and associated, in a determined proportion, with a thermosetting or thermoplastic material, and in shaping this lump (2) under pressure, wherein the preparation of said lump (2) consists in mixing said fibers and said thermosetting or thermoplastic material under air vacuum, while said shaping is obtained by introducing said lump (2) into a mold (1; 3; 4) designed and dimensioned in order to withstand high pressures, and which has a molding cavity (11; 34; 44) having the shape of the part (P) to be produced and provided with at least one well (12; 35; 45) configured to tightly receive a plunger piston (13; 36; 48) the sliding of which is capable of performing the compression of said lump (2) in said cavity (11 ; 34; 44) for its shaping in said mold (1; 3; 4), whereby the pressure does not remain installed in said mold (1; 3; 4).

2. The molding method according to claim 1, wherein during the preparation of the lump (2) the fibers are placed under air vacuum, then the resin is incorporated therein using the suction effect created by the air vacuum.

3. The molding method according to claim 1 or claim 2, wherein the fibers and the thermosetting or thermoplastic material are mixed after previous incorporation of a volatile solvent.

4. The molding method according to any one of claims 1 to 3, wherein the fibers and the thermosetting or thermoplastic material are mixed while respecting the following rules: the ratio between the length, or the minimum characteristic thickness, of the part (P) to be produced and the maximum length of the fibers is higher than 2, preferably equal to 4, and the ratio between the minimum length of the fibers and the diameter of the fibers is higher than 10.

5. The molding method according to any one of claims 1 to 4, wherein, when the mold (1; 3; 4) includes several wells (12; 35; 45) and plunger pistons (13; 36; 48), said pistons (13; 36; 48) are activated simultaneously or separately in a particular time sequence.

6. The molding method according to any one of claims 1 to 5, wherein the material is subjected before, during and/or after the compression to particular conditions of temperature.

7. The molding method according to any one of claims 1 to 6, wherein a force (F) is applied on the plunger piston or pistons (13; 36; 48) so as to generate a pressure between 30 and 1000 bars, depending on the needs.

8. The molding method according to any one of claims 1 to 7, wherein, for shaping the lump (2), fibers are used the length of which may vary in a controlled or random manner between 0.1 and 100 mm.

9. The molding method according to any one of claims 1 to 8, wherein in the mold cavity (11; 34; 44) of the mold (1; 3; 4) are placed, prior to the introduction the lump (2), one or more layers of woven or nonwoven sheet of reinforcing fibers embedded in a thermosetting or thermoplastic matrix.

10. The molding method according to any one of claims 1 to 9, wherein one or several inserts are incorporated into the lump (2), which are aimed at remaining in the part (P) to be produced, this incorporation occurring either during the preparation of said lump (2) or after the introduction of said lump (2) into the mold (1; 3; 4) or during the introduction into said mold (1; 3; 4) of said insert or inserts having previously been positioned in the latter.

11. The molding method according to claim 10, wherein the insert or inserts consist of one or more elements made of metal or plastic, or of one or more composite elements being in the form of a braid and/or sheet or layer of composite material.

12. The molding method according to any one of claims 1 to 11, wherein the materials entering into the composition of the lump (2) are finely weighed, so as to guarantee the shape of the part (P) to be molded.

13. The molding method according to any one of claims 1 to 10, wherein more thermosetting or thermoplastic material than necessary is incorporated into the lump (2), and creep and discharge of the excess of said material is provided for.

14. The molding method according to any one of claims 1 to 13, wherein at least one element made of compressible material is incorporated into the lump (2).

15. A molding device (1; 3; 4) for implementing the shaping operation under pressure of the molding method according to any one of claims 1 to 14, wherein it is formed of an element or several assembled elements having internally a cavity (11; 34; 44) having the shape of the part (P) to be produced, and wherein it comprises at least one well (12; 35; 45) designed so as, on the one hand, to permit the loading of the mold with material to be molded and, on the other hand, to tightly receive in sliding a plunger piston (13; 36; 48), the sliding of which generated by motor means is capable of performing the compression of said material to be molded, whereby the pressure does not remain installed in said mold.

16. The molding device (1; 3; 4) according to claim 15, wherein the plunger piston (13; 36; 48) has, on the inner side of the mold, an end shaped so as to take part in the shaping of the part (P) to be molded.
